# EUROPEAN PATENT APPLICATION

(11) **EP 2 890 165 A1**
(43) Date of publication of application: **01.07.2015**
(21) Application number: 13306871.8
(22) Date of filing: 26.12.2013
(51) Int. Cl.: H04W 8/18, H04W 4/00, H04W 88/06

(54) **Method for accessing a service, corresponding devices and system**

(71) Applicant: Gemalto SA, 92190 Meudon (FR)
(72) Inventor: Roussel, Nicolas, 13705 La Ciotat (FR); Joubert, Nicolas, 13705 La Ciotat (FR); Labourie, Florent, 13705 La Ciotat (FR)

(57) **Abstract**

The invention relates to a method for accessing a service.

According to the invention, a first device 12 accessing data storing means 144, the data storing means storing at least one subscription 143, 145 relating, each, to a mobile radio-communication network operator, the data storing means storing at least two applications 147, 149 relating, each, to a service provider, the method comprises the following steps:
- at least one second device sends to a link manager 140 at least one association command for requesting an association of at least one subscription with at least one application and/or at least one disassociation command for requesting a disassociation of at least one subscription associated with at least one application;
- the link manager activates and/or de-activates an association 150 or 160 of at least one subscription with at least one application respectively.

The invention also relates to corresponding first device 12, second device 18 and system10.

## Description

### Field of the invention:

The invention relates generally to a method for accessing a service.

Moreover, the invention pertains to a first device for accessing a service.

The first device may be a terminal, like notably a mobile (tele)phone. Furthermore, the invention relates to a system comprising a first device and a chip.

The present invention is notably applicable to a mobile radio-communication field wherein a chip may be either an embedded chip, such as an embedded Universal Integrated Circuit Card (or eUICC), or a chip that is included within a smart card termed Subscribed Identity Module (or SIM) type card or the like, as a secure element.

Within the present description, a Secure Element (or SE) is a smart object that, on the one hand, protects access to data that the smart object stores and, on the other hand, is intended to communicate with the outside world.

### State of the art:

As known per se, a mobile phone, as a user terminal, interacts with an SE, so as to identify and authenticate a subscriber to a mobile radio-communication network. The SE contains several subscriptions to different mobile radio-communication networks. A subscription to a mobile radio-communication network allows accessing one or several applications or services that are also supported by the SE. Each mobile radio-communication network is operated by a Mobile Network Operator (or MNO). Several MNOs that operate different mobile radio-communication networks thus cooperate with different respective service providers, like bank operators.

However, a bank operator, as service provider, desires to be the single service provider to have a corresponding service that is supported by the SE while different subscriptions have to coexist within one and the same SE.

There is a need to provide a solution that allows keeping an independency between the services, the subscriptions and their respective relationships.

### Summary of the invention:

The invention proposes a solution for solving the just herein above specified need by providing a method for accessing a service.

According to the invention, a first device accesses data storing means. The data storing means stores at least one subscription relating, each, to a mobile radio-communication network operator. The data storing means stores at least two applications relating, each, to a service provider. The method comprises the following steps. At least one second device sends to a link manager at least one association command for requesting an association of at least one subscription with at least one application and/or at least one disassociation command for requesting a disassociation of at least one subscription associated with at least one application. The link manager activates and/or de-activates an association of at least one subscription with at least one application respectively.

The principle of the invention consists in that a link manager, at a first device side, receives from a requester(s), as a second device(s), one or several requests to create and/or to delete an association of a subscription with one or several applications that are supported, besides the subscription, by the same device. Then, the link manager activates and/or deactivates a logical link that links the subscription and the application(s) that is(are) to be associated/dissociated.

It is to be noted that the link manager is supported at a client side, i.e. by either the first device itself or another device, as a third device. In other words, the second device(s) addresse(s) either the first device link manager or a third device link manager.

Thus, the invention solution allows managing several subscriptions relating to different MNOs and several applications relating to different service providers that are supported by one and the same device, namely either the first or third device.

The invention solution is flexible since it thus allows supporting, within one and the same medium, at the first device side, subscriptions relating to different MNOs and applications relating to different service providers and personalizing the link(s) to be active at the first device.

It is noteworthy that a second device includes a remote server or a local terminal.

The invention solution requires no human intervention to activate and/or de-activate a specific link or association between a subscription and one or several applications.

The invention solution does not require, at the link manager side, any additional memory space that is used for storing the concerned subscription and application data.

Advantageously, each of the at least one subscription is stored with a subscription security domain and/or each of the at least one application is stored with another application security domain.

In other words, data relating to each subscription is stored within a dedicated security domain and/or data relating to each application is also stored within another dedicated security domain.

Such an invention also allows keeping an independency between a subscription that belongs to an MNO and another subscription that belongs to another MNO while being secure in access.

Such an invention also allows keeping an independency between a service(s) that belong(s) to a service provider and another service(s) that belong(s) to another service provider while being secure in access.

Such an invention embodiment allows keeping independency between a subscription and one or several applications that are to be associated and/or dissociated with the subscription.

According to a further aspect, the invention is a first device for accessing a service.

According to the invention, a first device comprises data storing means. The data storing means stores at least one subscription relating, each, to a mobile radio-communication network operator. The data storing means stores at least two applications relating, each, to a service provider. The data storing means stores a link manager. The link manager is configured to receive at least one association command for requesting an association of at least one subscription with at least one application and/or at least one disassociation command for requesting a disassociation of at least one subscription associated with at least one application. The link manager is configured to activate and/or to de-activate an association of at least one subscription with at least one application respectively.

The first device may be a terminal.

According to still a further aspect, the invention is a second device for accessing a service.

According to the invention, the second device is configured to send at least one association command for requesting an association of at least one subscription with at least one application and/or at least one disassociation command for requesting a disassociation of at least one subscription associated with at least one application.

The second device may be a server.

According to still an additional aspect, the invention is a system for accessing a service.

According to the invention, the system comprises a first device and a chip coupled or connected to the first device. The chip comprises data storing means, the data storing means storing at least one subscription relating, each, to a mobile radio-communication network operator, the data storing means storing at least two applications relating, each, to a service provider, the data storing means storing a link manager. The link manager is configured to receive at least one association command for requesting an association of at least one subscription with at least one application and/or at least one disassociation command for requesting a disassociation of at least one subscription associated with at least one application. The link manager is configured to activate and/or to de-activate an association of at least one subscription with at least one application respectively.

The chip may be either fixed to or removable from the first device.

The chip may be included within a Secure Element (or SE). The invention does not impose any constraint as to a kind of the secure element type.

As removable SE, it may be a SIM type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled to a host device, as first device.

### Brief description of the drawings:

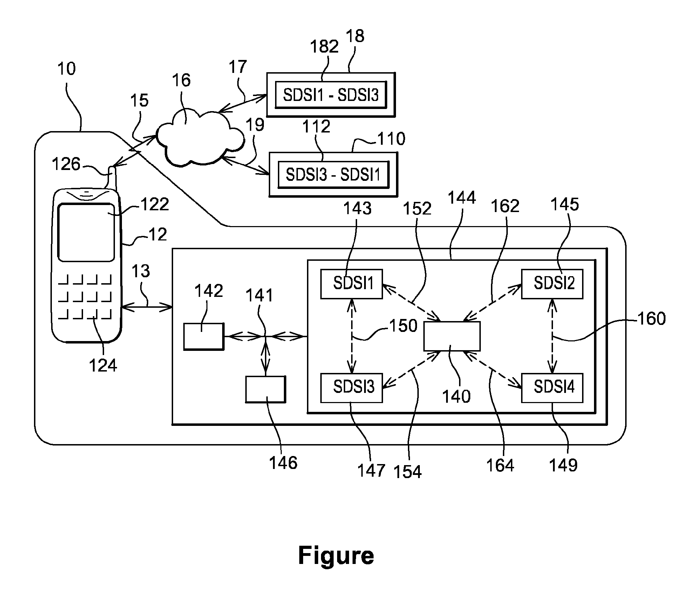

Additional features and advantages of the invention will be more clearly understandable after reading a detailed description of one preferred embodiment of the invention, given as an indicative and non-limitative example, in conjunction with a unique figure that represents a simplified diagram of two remote servers and one embodiment of a terminal equipment, a link manager supported by a chip hosted by the terminal creates/deletes, under control of the two remote servers, an association of a subscription with the application, according to the invention.

### Detailed description:

Herein under is considered a case in which the invention method for accessing a service is implemented by a mobile phone, as a first device and a chip host device, two remote servers, as second devices, and a chip, as a third device, that is fixed to the phone.

According to another embodiment, the invention method for accessing a service is implemented by a mobile phone, as first device and standalone entity, and one or two remote servers, as a second device(s). In other words, the phone, as user terminal, does not cooperate with any chip, so as to associate/dissociate a subscription with one or several applications. According to such an embodiment (not represented), the first device is adapted to carry out the functions that are carried out by the chip and the first device and that are described infra.

Naturally, the herein below described embodiment is only for exemplifying purposes and is not considered to reduce the scope of the invention.

**The figure** shows schematically a terminal equipment 10, as a system for accessing a service, that is connected to two remote servers 18 and 110.

The terminal equipment 10, as a system for accessing a service, includes a mobile phone 12, as a user terminal, and a UICC 14.

For sake of simplicity, the mobile phone 12, the UICC 14, the remote server 18 and the remote server 110 are termed herein after the phone 12, the chip 14, the first server 18 and the second server 110 respectively.

Only one terminal equipment is represented for clarity reason. However, the first 18 and second 110 servers are able to access a fleet of terminals/chips.

Alternatively (not represented), instead of two servers, only one device, as second device, is adapted to carry out the functions that are carried out by the first server 18 and the second server 110 and that are described infra.

The first server 18 is identified by a Uniform Resource Identifier (or URI), a Uniform Resource Locator (or URL) and/or an Internet Protocol (or IP), as first server identifier.

The first server identifier may be stored within a chip or phone memory.

The first server 18 may be operated by a mobile radio-communication network operator, as an MNO or a Mobile Virtual Network Operator (or MVNO), or on its behalf.

The first server 18 is hosted by a computer. As computer, it includes means for processing data, comprising or being connected to communication means for exchanging data with outside, and comprising or being connected to means for storing data.

The first server 18 plays a role of a link (or association) manager while being controlled by or through a MNO or the like.

The first server 18 is dedicated to running an application for managing a first database and communicating some data of the first database to outside.

The first server 18 is preferably able to authenticate to one or several client devices by providing corresponding authentication data.

To authenticate to each client device, the first server 18 use(s) preferentially a first server authentication key Ks1. The first server authentication key Ks1 is preferably a symmetric key shared with an external entity, like each client device. The first server 18 also uses preferably data, as a challenge that is supplied by an external entity that attempts to authenticate the first server 18, and an authentication algorithm. By using the authentication algorithm, the challenge and the first server authentication key Ks1, the first server 18 generates a first cryptogram, as authentication data. The first server 18 sends to the external entity the first cryptogram. The external entity, like the client device, checks whether the first cryptogram matches expected data, as data authenticating the first server 18 and authentication data relating to an MNO or the like. If yes, the external entity authenticates the first server 18.

Alternately, another server (not represented) that is connected to the first server 18 manages the first database.

The first server 18 includes preferably a first memory 182 that stores the first database.

Instead of an internal memory, the first server 18 is connected to an external memory (not represented) storing the first database.

The first database includes a set of one or several identifiers relating, each, to an individual client that is, each, associated with an association or a logical link to be created/deleted of a subscription with one or several applications that are supported, besides the concerned subscription, by the same client device.

A particular subscription may be identified by one or several identifiers, like an subscriber identifier IMSI, an identifier relating to application, also termed Application IDentifier (or AID), a Security Domain Subscription Issuer (or SDSI) and/or an identifier(s) relating to any software or hardware entity(ies) that is(are) involved within a communication path to access the concerned subscription data.

A particular application may be identified by one or several identifiers, like an identifier relating to application, AID, a Security Domain Subscription Issuer (or SDSI) and/or an identifier(s) relating to any software or hardware entity(ies) that is(are) involved within a communication path to access the concerned application data.

For sake of simplicity, the represented first database registers one or several identifiers (not represented) relating to only one client, the chip 14, that is associated with a logical link or an association. The association for the chip 14 is represented by a couple of an identifier relating to the subscription, like an SDSI 1, and an identifier relating to the application, like an SDSI 3, that is associated with or dissociated from the subscription when an association is to be created or deleted respectively.

The first server 18 is adapted to send to the chip 14, as a client device, one or several association commands. Each association command allows requesting an association of one subscription with one or several applications.

The first server 18 is adapted to send to the chip 14, as a client device, one or several dissociation (or disassociation) commands. Each dissociation command allows requesting a dissociation (or disassociation) of one subscription with one or several applications that are associated with the concerned subscription.

The association command or dissociation command authentication issued by the second server 110 includes preferably authentication data relating to the first server 18, authentication data relating to a corresponding MNO or the like.

The second server 110 is identified by a URI, a URL and/or an IP, as second server identifier.

The second server identifier may be stored within a chip or phone memory.

The second server 110 may be operated by a bank operator or on its behalf, as a service provider.

The second server 110 is hosted by a computer.

The second server 110 is dedicated to running an application for managing a second database and communicating some data of the second database to outside.

The second server 110 plays a role of a link (or association) manager while being controlled by or through a service provider or the like.

Alternately, another server (not represented) that is connected to the second server 110 manages the second database.

The second server 110 is preferably able to authenticate to one or several client devices by providing corresponding authentication data.

To authenticate to each client device, the second server 110 uses preferentially a second server authentication key Ks2. The second server authentication key Ks2 is preferably a symmetric key shared with an external entity, like each client device. The second server 110 also uses preferably data, as a challenge that is supplied by an external entity that attempts to authenticate the second server 110, and an authentication algorithm. By using the authentication algorithm, the challenge and the second server authentication key Ks2, the second server 110 generates a second cryptogram, as authentication data. The second server 110 sends to the external entity the second cryptogram. The external entity, like the client device, checks whether the second cryptogram matches expected data, as data authenticating the second server 110 and authentication data relating to a service provider. If yes, the external entity authenticates the second server 110.

Alternately, another server (not represented) that is connected to the second server 110 manages the second database.

The second server 110 includes preferably a second memory 112 that stores the second database.

Instead of an internal memory, the second server 110 is connected to an external memory (not represented) storing the second database.

The second database includes a set of one or several identifiers relating, each, to an individual client that is, each, associated with an association or a logical link to be created/deleted of an application with one or several subscriptions that are supported, besides the concerned application, by the same client device.

For sake of simplicity, the represented second database registers one or several identifiers (not represented) relating to only one client, the chip 14, that is associated with a logical link or an association. The association for the chip 14 is represented by a couple of an identifier relating to the application, like SDSI 3, and an identifier relating to the subscription, like SDSI 1, that is associated with or dissociated from the application when an association is to be created or deleted respectively.

The second server 110 is adapted to send to the chip 14, as a client device, one or several association commands. Each association command allows requesting an association of one application with one or several subscriptions. The association command includes a Global Platform type command. The Global Platform type command comprises, e.g. a Store Data Type command that includes a first variable. A first predetermined value of the first variable means that a link or an association is to be activated. A second predetermined value of the first variable means that a link or an association is to be de-activated.

The second server 110 is adapted to send to the chip 14, as a client device, one or several dissociation (or disassociation) commands. Each dissociation command allows requesting a dissociation (or disassociation) of one application with one or several subscriptions that are associated with the concerned application.

The association command or dissociation command (be it issued by the first server 18 or the second server 110) includes a Global Platform type command. The Global Platform type command comprises, e.g. a Store Data Type command that includes a first variable. A first predetermined value of the first variable means that a link or an association is to be activated. A second predetermined value of the first variable means that a link or an association is to be de-activated.

The association command or dissociation command authentication issued by the second server 110 includes preferably authentication data relating to the second server 110, as authentication data relating to a service provider.

It is assumed that the client accesses several subscriptions relating to different MNOs, or the like, and several applications relating to different service providers, or the like.

It is assumed that, at the most, only one subscription is active at a given time.

At the client side, there is notably the terminal equipment 10.

Instead of a phone, the terminal may be any other device including means for processing data, comprising or being connected to wireless communication means for exchanging data with outside, and comprising or being connected to means for storing data.

Within the present description, the adjective "wireless" used within the expression "wireless communication means" denotes notably that the communication means communicates via one or several Long Range (or LR) Radio-Frequency (or RF) links.

The LR RF may be fixed at several hundreds of MHz, for instance, around 850, 900, 1800, 1900 and/or 2100 MHz.

Instead of being constituted by a phone, the chip host device may be, for instance, a Machine-to-Machine (or M2M) controller, a set-up box, a desktop computer, a laptop computer, a media-player, a game console, a tablet, a netbook, a handset and/or a Personal Digital Assistance (or PDA) that incorporates preferably or cooperates with a baseband radio processor. The baseband radio processor manages radio functions in cooperation with an antenna for communicating, Over-The-Air (or OTA), with another entity, like the server 18.

Such a chip host device set is not exhaustive but only for exemplifying purposes.

The phone 12 is preferably used for accessing one or several mobile radio-communication networks 16.

The mobile radio-communication networks 16 may be constituted by a Global Service for Mobiles (or GSM), a General Packet Radio Service (or GPRS), a Universal Mobile Telecommunications System (or UMTS), a UTRAN (acronym for "UMTS Terrestrial Radio Access Network"), an EDGE (acronym for "Enhanced Data Rates for GSM Evolution"), a Code Division Multiple Access (or CDMA), a WLAN (acronym for "Wide Local Area Network") and/or a Long Term Evolution (or LTE) type network(s).

Such a mobile radio-communication network set is not exhaustive but only for exemplifying purposes.

The phone 12 includes preferably a display screen 122 and a keyboard 124, as Man Machine Interface (or MMI).

Alternatively, instead of a physical keyboard separated from the display screen, the phone 12 is equipped with a touch sensitive display screen, as virtual keyboard.

The MMI allows a phone user to interact with the phone 12.

The phone 12 comprises an antenna 126. The antenna 126 allows communicating data, through an LR RF link(s) 15, with one or several mobile radio-communication networks 16.

The phone 12 includes data processing means, such as one microprocessor (not represented), data storing means (not represented), as phone memory, and one or several Input/Output (or I/O) interfaces that are linked all together through a control and data bus (not represented).

The phone 12 plays, in a preferential manner, a role of a modulator-demodulator (or modem), so as to exchange data with the server 18.

The phone 12 carries out the following operations:
- a modulation of an analogical carrier signal to encode digital information to be transmitted, over the antenna 126, to each of the first 18 and second 110 server, and
- a demodulation of a received analogical carrier signal to decode the encoded digital information that is received, over the antenna 126, from each of the first 18 and second 110 server.

The phone memory may comprise one or several memories including one or several volatile memories and one or several non-volatile memories.

A phone memory, be it either volatile or non volatile, stores, at least in a temporary manner, data relating to a subscription and/or data relating to an application which the phone 12 receives from either the first 18 and/or the second 110 server for the chip 14 or the chip 14 for the first 18 and/or the second 110 server.

To store data relating to a subscription and/or data relating to an application, the phone 12 may include, as volatile memory, a cache memory.

The phone memory stores an Operating System (or OS) and one or several applications.

The phone 12, as chip host device, is preferably coupled or connected to the chip 14.

The phone I/O interfaces include an I/O interface for exchanging data with the chip 14.

The chip 14 is under control of the phone microprocessor.

Alternately, instead of being coupled to the chip 14, the phone memory(ies) stores data stored within the chip 14 as described infra.

According to a particular embodiment, the chip 14 is soldered to a Printed Circuit Board (or PCB) of the phone 12.

According to another embodiment, the phone I/O interface with the chip 14 is an International Organization for Standardization (or ISO) 7816 interface, as contact interface, when the chip 14 is inserted, in a removable manner, within the phone 12.

Alternately, instead of a contact interface, the phone I/O interface with the chip 14 is connected to or includes a contact-less interface. The phone 12 is connected to or includes means for communicating data while using preferably a Short Range (or SR) RF link. The SR RF link may be related to any technology that allows the phone 12 to exchange data, through a so-termed contact-less link with the chip 14. The SR RF may be fixed at 13,56 MHz and related to a Near Field Communication (or NFC) type technology, as contact-less technology.

The chip 14 is preferably associated with or tied to the first server 18.

The chip 14 belongs to a user, as subscriber to a wireless service(s).

The chip 14 is connected, through a bi-directional link 13, to the phone 12.

The chip 14 includes a microprocessor(s) 142, as data processing means, a memory(ies) 144, as data storing means, and one or several I/O interfaces 146 that are internally all connected, through an internal bidirectional data bus 141, to each other.

The microprocessor 142 processes, controls and communicates internally data with all the other components incorporated within the chip and, through the I/O interface(s) 146, with the chip exterior.

The microprocessor 142 executes or runs one or several applications including the link manager 140.

The microprocessor 142 is preferably able to initiate actions, in order to interact directly with the outside world, in an independent manner of the phone 12, as a chip host device. Such a capacity of interaction at the initiative of the chip 14 is also known as proactive capacity. According to one preferred embodiment, the chip 14 is able to use SIM ToolKit (or STK) type commands, as proactive commands.

The chip 14 is thus able to send, at its own initiative, through the phone 12, to any device connected to the phone 12 a proactive command for sending to the server 18 a message, like a HyperText Transfer Protocol (or HTTP) or HTTP Secure (or HTTPS) type message, that includes a request for opening a channel, such as "open channel".

The chip 14 is able to switch from a subscription to another subscription by deactivating a current active subscription and activating a non-active subscription to be activated.

The microprocessor 142 executes, in a preferred manner, one or several security functions.

The security functions include preferably a user authentication process to be used prior to continuing to access the memory 144, notably at a boot and/or a re-boot of the chip 14. To authenticate the user, the user has to provide a PIN or biometric data, as user reference data, that is securely stored within the memory 144. As biometric data, it may include one or several fingerprints, one or several iris prints, one or several voiceprints relating to one or several authorized users.

The I/O interface(s) 146 allow communicating data from the internal chip components to the chip exterior and conversely.

The memory 144 stores preferably data relating to a Uniform Resource Identifier (or URI), a Uniform Resource Locator (or URL) and/or an Internet Protocol (or IP) address of each external entity to be addressed, like the first 18 and the second 110 server.

The memory 144 stores an OS.

The memory 144 stores preferably one or several Subscriber Identity Module (or SIM) type applications.

The SIM type application(s) includes, among others, a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the phone 12 to authenticate to one or several mobile radio-communication networks 16.

To authenticate to a mobile radio-communication network 16, the SIM type application uses preferentially a network authentication key Ki relating to a current active subscription. The SIM type application also uses preferably data, as a challenge that is supplied by an external entity that attempts to authenticate the subscriber, and an authentication algorithm, like, for instance, Milenage. By using the authentication algorithm, the network authentication key Ki and the challenge, the chip 14 generates data that allows authenticating the chip 14 and therefore the phone 12.

The memory 144 stores one or several additional applications. Among the supported applications, the memory 144 stores an invention application termed link manager that the microprocessor 142 executes.

The link manager 140 allows carrying out a link or an association of one subscription with one application, so as to liaise the subscription with the application. In other words, the terminal user is able to access only the liaised application while using the concerned subscription.

To carry out such an association of a subscription with an application, the link manager 140 is adapted to receive two association commands for requesting an association of a subscription with one application. A first association command originates from the first server 18 and a second association command originates from the second server 110. The first and second association commands identify one and the same subscription and one and the same application. The link manager is further adapted to activate an association of the subscription with the application that has been requested by the first 18 and second 110 servers that the chip 14 has preferably authenticated.

The link manager 140 also allows carrying out a dissociation of one subscription that is associated with one application, so as to separate or isolate the subscription from the application. In other words, the terminal user is no more able to access the previously liaised application while using the concerned subscription.

To carry out such a dissociation of a subscription associated with an application, the link manager 140 is adapted to receive at least one dissociation command for requesting a dissociation of a subscription associated with one application. A first dissociation command may originate from the first server 18 and/or a second dissociation command may originate from the second server 110. The first and second dissociation commands (if both are needed) identify one and the same subscription and one and the same application associated with the subscription. The link manager is further adapted to de-activate an association of the subscription associated with the application that has been requested by the first 18 and second 110 servers that the chip 14 has preferably authenticated.

The link manager 140 is thus in charge of logical links between subscriptions and applications (services).

The link manager 140 manages a set of local logical links between each subscription and its corresponding associated application(s). Such a set may be updated from the first server 18 and the second server 110.

The link manager 140 allows ensuring a runtime independency between the applications and therefore their respective service providers.

The memory 144 stores data relating to a plurality of subscriptions to several mobile radio-communication networks 16, as a wireless service(s).

Each set of data relating to one subscription to one mobile radio-communication network includes:
- an International Mobile Subscriber Identity (or IMSI), as subscriber and service subscription identifier for accessing a mobile radio-communication network;
- a key Ki, as network authentication key, allowing to authenticate the concerned subscriber to the concerned mobile radio-communication network;
- Milenage, as authentication algorithm, allowing to authenticate the concerned subscriber to the concerned mobile radio-communication network;
- one or several passwords, like a Personal Identity Number (or PIN), and/or one or several cryptographic algorithm(s), as data relating to secret(s), that is(are) securely stored within the chip 14;
- a file system including one or several Elementary Files (or EF);
- one or several security keys, like a key(s) for encrypting/decrypting data and/or a key(s) for signing data a key(s);
- one or several applicative keys, like a key for accessing a user bank account through the mobile radio-communication network; and/or
- one or several credentials, like a user name and/or IDentifier (or ID) of the subscriber, as data relating to the user.

For sake of simplicity, the memory 144 stores, for instance, only two sets of subscription data, one set of data relating to a first subscription, as "SDSI1", and another set of data relating to a second subscription, as "SDSI2".

Two subscriptions relating to different mobile radio-communication networks are available, at the client side, within one and the same chip 14.

However, the memory 144 may store more than two sets of subscription data and the invention is still applicable.

The memory 144 stores preferably within a first subscription security domain 143, as a first memory area, the first set of data relating to a first subscription.

The first subscription data set allows accessing from the phone 12, through a first mobile radio-communication network (not represented), to the first server 18. The first mobile radio-communication network is connected to the first server 18.

The first subscription data comprises an identifier IMSI1, as a first subscriber, relating to a first subscription.

The first subscription data includes preferably a first key Ki1, as a first network authentication key Ki1, for authenticating the subscriber to the first mobile radio-communication network. The first network authentication key Ki1 is associated with the first subscriber IMSI1. The first network authentication key Ki1 allows authenticating the associated first subscriber to the first mobile radio-communication network.

The memory 144 also stores preferably, within a second subscription security domain 145, as a second memory area, the second set of data relating to a second subscription.

The second subscription data set allows accessing from the phone 12 to a second mobile radio-communication network (not represented). The second mobile radio-communication network is also connected to the first server 18.

The second mobile radio-communication network may be distinct from the first mobile radio-communication network.

The second subscription data comprises an identifier IMSI2, as a second subscriber, relating to a second subscription.

The second subscription data includes preferably a second key Ki2, as a second network authentication key Ki2, for authenticating the subscriber to the second mobile radio-communication network. The second network authentication key Ki2 is associated with the second subscriber IMSI2. The second network authentication key Ki2 allows authenticating the associated second subscriber to the second mobile radio-communication network.

Two applications relating to different service providers, like bank operators, are available, at the client side, within one and the same chip 14.

For sake of simplicity, the memory 144 stores, for instance, only two sets of application data, one set of data relating to a first application, as "SDSI3", and another set of data relating to a second application, as "SDSI4".

The application data include executable data, like code, and non-executable data, like a parameter(s).

The memory 144 stores preferably within a first application security domain 147, as a third memory area, a first set of data relating to a first application.

The first application data set allows accessing from the phone 12 to a corresponding first service.

The memory 144 also stores preferably within a second application security domain 149, as a fourth memory area, a second set of data relating to a second application.

The second application data set allows accessing from the phone 12 to a corresponding second service.

The link manager 140 is logically connected, through a first link 152, to the first subscription security domain 143, as the first subscription "SDSI1".

The link manager 140 is logically connected, through a second link 154, to the first application security domain 147, as the first application "SDSI3".

The link manager 140 is logically connected, through a third link 152, to the second subscription security domain 145, as the second subscription "SDSI2".

The link manager 140 is logically connected, through a second link 154, to the second application security domain 147, as the second application "SDSI4".

The link manager 140 receives either directly or indirectly through the corresponding subscription SDSI1 or SDSI2 or application SDSI3 or SDSI 4 an association (or dissociation) command from the first server 18 or the second server 110 respectively.

The link manager 140 is preferably configured to activate at the most only one subscription and its corresponding association with one or several applications to be associated.

The link manager 140 creates a couple of a first identifier relating to the subscription and a second identifier relating to the application(s) for each subscription that is associated with an application.

For instance, the link manager activates, further to a reception of an association command that includes an identifier relating to the first subscription, like SDSI1, and an identifier relating to the first application, like "SDSI 3" a link 150 between the first subscription "SDSI1" and the first application "SDSI3" to be associated with the first application.

The first subscription "SDSI1" is then active, i.e. is in an enabled state, at the chip 14 side. The second subscription "SDSI2" is non-active, i.e. is in a disabled state, at the chip 14 side.

The first application "SDSI3" is active while the second application "SDSI4" is non-active at the chip 14 side.

For instance, the link manager de-activates, further to a reception of a dissociation command that includes an identifier relating to the first subscription, like SDSI1, and an identifier relating to the first application, like "SDSI 3" the link 150 between the first subscription "SDSI1" and the first application "SDSI3" to be associated with the first application.

The first subscription "SOSI1" and the second subscription "SDSI2" are non-active at the chip 14 side.

The first application "SDSI3" and the second application "SDSI4" are non-active at the chip 14 side.

Then, the link manager 140 activates, further to a reception of an association command that includes an identifier relating to the second subscription, like "SDSI2", and an identifier relating to the second application, like "SDSI4" the link 160 between the second subscription "SDSI2" and the second application "SDSI4" to be associated with the second application.

The second subscription "SDSI2" is then active while the first subscription "SDSI1" is non-active, at the chip 14 side.

The second application "SDSI4" is active while the first application "SDSI3" is non-active at the chip 14 side.

The invention solution allows enabling/disabling, in a dynamic manner, an association between a subscription and an (or several) applications without needing to involve a phone user, except for submitting user authentication data, when applicable.

Thus, a chip 14 may be personalized after a post-issuance. The chip 14 may include all the subscriptions and all the applications in a generic manner while only one association between one subscription and one (or several) applications (when compatible) is further enabled.

The invention solution is transparent to the user, apart from a possible user authentication operation.

The invention solution may be secure while authenticating the first 18 and the second 110 servers and the link manager.

The embodiment that has just been described is not intended to limit the scope of the concerned invention. Other embodiments may be given. As another embodiment example, instead of exchanging with two remote servers, the link manager exchanges with only one remote server. As still another embodiment example, instead of exchanging with two remote servers, the link manager exchanges, over a contact or contact-less link, with one or two local entities, like one or two terminals or a M2M type equipment. Alternately, instead of exchanging with two remote servers, the link manager exchanges, on the one hand, with one remote server, and, on the other hand, over a contact or contact-less link, with one local entity, like a terminal or a M2M type equipment.

## Claims

1. A method for accessing a service,
**characterized in that,** a first device (12) accessing data storing means (144), the data storing means storing at least one subscription (143, 145) relating, each, to a mobile radio-communication network operator, the data storing means storing at least two applications (147, 149) relating, each, to a service provider, the method comprises the following steps:
- at least one second device sends to a link manager (140) at least one association command for requesting an association of at least one subscription with at least one application and/or at least one disassociation command for requesting a disassociation of at least one subscription associated with at least one application;
- the link manager activates and/or de-activates an association (150 or 160) of at least one subscription with at least one application respectively.

2. Method according to claim 1, wherein each of the at least one subscription is stored with a subscription security domain (143 or 145) and/or each of the at least one application is stored with another application security domain (147 or 149).

3. Method according to claim 1 or 2, wherein each of the at least one association command and/or each of the at least one disassociation command includes authentication data relating to a Mobile Network Operator and/or authentication data relating to a Service Provider.

4. Method according to any previous claim, wherein the second device and the link manager exchange data by using an HTTP or HTTPS type protocol.

5. Method according to any previous claim, wherein each of the at least one association command and/or each of the at least one disassociation command includes a Global Platform type command.

6. Method according to claim 5, wherein the Global Platform type command includes a Store Data type command including a first variable, the first variable having either a first predetermined value when a link is to be activated or a second predetermined value when an active link is to be deactivated.

7. Method according to any previous claim, wherein the link manager activates an association (150) of one subscription (143,147) with at least one application by creating a couple (SDSI1-SDSI3) of a first identifier relating to the subscription and a second identifier relating to the at least one application.

8. A first device (12) for accessing a service,
**characterized in that,** a first device comprising data storing means (144), the data storing means storing at least one subscription (143, 145) relating, each, to a mobile radio-communication network operator, the data storing means storing at least two applications (147, 149) relating, each, to a service provider, the data storing means storing a link manager (140), the link manager is configured:
- to receive at least one association command for requesting an association of at least one subscription with at least one application and/or at least one disassociation command for requesting a disassociation of at least one subscription associated with at least one application;
- to activate and/or to de-activate an association (150, 160) of at least one subscription with at least one application respectively.

9. A second device (18, 110) for accessing a service,
**characterized in that** the second device is configured to send at least one association command for requesting an association of at least one subscription with at least one application and/or at least one disassociation command for requesting a disassociation of at least one subscription associated with at least one application.

10. A system (10) for accessing a service,
**characterized in that,** the system comprising a first device (12) and a chip (14) coupled or connected to the first device, the chip comprising data storing means (144), the data storing means storing at least one subscription (143, 145) relating, each, to a mobile radio-communication network operator, the data storing means storing at least two applications (147, 149) relating, each, to a service provider, the data storing means storing a link manager (140), the link manager is configured:
- to receive at least one association command for requesting an association of at least one subscription with at least one application and/or at least one disassociation command for requesting a disassociation of at least one subscription associated with at least one application;
- to activate and/or to de-activate an association (150, 160) of at least one subscription with at least one application respectively.
